# EUROPÄISCHE PATENTSCHRIFT

(11) **EP 0 636 406 B1**
(45) Veröffentlichungstag und Bekanntmachung des Hinweises auf die Patenterteilung: **20.05.1998**
(21) Anmeldenummer: 94110133.9
(22) Anmeldetag: 29.06.1994
(51) Int. Cl.: B01J 2/20, B30B 11/22

(54) **Schneidwerkzeug für eine Extrusionmaschine**
Cutting element for an extrusion device
Elément de découpage pour machine d'extrusion

(30) Priorität: 30.06.1993 DE 4321771
(43) Veröffentlichungstag der Anmeldung: 01.02.1995
(73) Patentinhaber: EMIL LIHOTZKY Maschinenfabrik, D-94447 Plattling (DE)
(72) Erfinder: Czarnetzki, Robert Gregor, D-94469 Deggendorf (DE)
(74) Vertreter: Weber, Otto Ernst, Dipl.-Phys.

(56) Entgegenhaltungen:
- WO-A-90/03217
- DE-A- 1 813 221
- DE-A- 4 028 558
- FR-A- 2 515 934
- PATENT ABSTRACTS OF JAPAN vol. 12, no. 299 (C-520) 15. August 1988 & JP-A-63 071 164 (HASHIZUME SHINJI) 31. März 1988

## Beschreibung

Die Erfindung betrifft ein Schneidwerkzeug für eine Extrusionsmaschine gemäß dem Oberbegriff des Anspruchs 1. Hierbei ist insbesondere zur Extrusion von chemischen Granulaten, vorzugsweise für Waschmittel, ein im Bereich einer Material-Austrittsöffnung angeordnetes Formwerkzeug vorgesehen, dem das drehbar gelagerte Schneidwerkzeug zugeordnet ist, welches nach Art eines Flügelrades ausgebildet ist, bei dem mehrere Messerklingen an einer Messerhalterung angebracht und an einer ebenen Auflagefläche des Formwerkzeugs auf einer Kreisbahn entlangführbar sind.

Bei Extrusionsmaschinen wird mit Hilfe einer Extrusionspresse Material durch Öffnungen hindurchgepreßt, die in dem Formwerkzeug ausgebildet sind. Der Durchmesser dieser Öffnungen kann beispielsweise in der Größenordnung von einem Millimeter liegen.

Das Schneidwerkzeug dient bei einer derartigen Maschine dem Zweck, das Material, beispielsweise Waschpulver, nach dem Austritt aus dem Formwerkzeug auf eine vorgegebenen Länge abzuschneiden. Auf diese Weise entsteht ein Granulat, welches aus kleinen zylinderförmigen Teilchen besteht, deren Länge in der Größenordnung von einem Millimeter liegen kann.

In Abhängigkeit von der Zusammensetzung des Materials können unterschiedliche Material-Eigenschaften auftreten. Häufig ist das Material stark klebrig. Es besteht dann die Gefahr, daß das Material, anstatt ohne weiteres in ein Ausfallrohr hineinzufallen, an den Wänden des Ausfallrohres und/oder am Schneidwerkzeug haftenbleibt. Es kann unter Umständen eine derartige Menge von Material am Schneidwerkzeug haftenbleiben, daß im Produktionsablauf untragbare Störungen auftreten. Es können dabei nämlich an dem Schneidwerkzeug störende Unwuchten in Erscheinung treten. Es kann auch dazu kommen, daß die Messerklingen so stark von anhaftendem Material zugesetzt werden, daß kein ordnungsgemäßer Schnitt mehr gewährleistet ist.

Bei den bekannten Schneidwerkzeugen sind die Messerklingen an radiale Messerhalter angeschraubt. Die Messerklingen werden zum Anschrauben zunächst von oben auf die Messerhalter aufgesetzt und dann mit Hilfe von Schrauben an diesen radialen Armen, welche als Messerhalter dienen, festgeschraubt. Um eine ausreichende Stabilität zu erreichen, sind die als radiale Arme ausgebildeten Messerhalter verhältnismäßig stark dimensioniert. Diese Messerhalter, welche sich im wesentlichen über die gesamte radiale Ausdehnung der Messerklingen erstrecken, stehen zwangsläufig erheblich nach unten und/oder oben vor, so daß erhebliche Mengen des Granulat-Materials gegen die vorstehenden Flächen geschleudert werden. Bei entsprechend ungünstiger Konsistenz dieses Materials kommt es daher bei der Rotation des Schneidwerkzeuges dazu, daß sich immer mehr Material an den Messerhaltern und weiterhin dann auch an den Messerklingen ansetzt und dort zu Materialgebirgen aufwächst. Wenn die dadurch entstehende Unwucht zu groß wird oder sogar der Schneid-Vorgang wegen des in größerer Menge an den Messerklingen anhaftenden Materials nicht mehr ordnungsgemäß ausgeführt wird, muß unter Umständen die Produktion unterbrochen werden, um das Schneidwerkzeug zu reinigen.

Weiterhin muß die Produktion auch deswegen in gewissen zeitlichen Abständen unterbrochen werden, damit die Messerklingen nachgeschliffen werden können.

Dazu muß die Extrusionpresse zunächst angehalten werden, das Schneidwerkzeug muß vorläufig gereinigt werden und schließlich ausgebaut werden. Nach dem Auswechseln des Schneidwerkzeuges muß die Produktion dann wieder angefahren werden. Dieser Anfahrprozeß führt jedoch zunächst zu einem gewissen Produktionsausschuß, denn es dauert eine gewisse Zeit, bis durch entsprechende Einstellung des gesamten Verfahrensablaufs die gewünschte Qualität nach dem Anfahren wieder erreicht ist.

Zur Extrusion von Waschmitteln gibt es beispielsweise Herstellungsverfahren, bei denen zunächst Trockenstoffe abgewogen werden und anschließend über mehrere Stockwerke zu einem Mischer transportiert werden. Dort werden verschiedene Flüssigkeiten pulvrigen Stoffen zugesetzt. Das Gemisch wird dann dem Extruder zugeführt. Muß nun, bedingt durch ein verschmutztes Schneidwerkzeug, der Fertigungsprozeß unterbrochen werden, so verbleibt im Mischer eine Charge des Produktes. Dieses Produkt weist nach einer gewissen Produktionspause hinsichtlich Konsistenz und Zusammensetzung nicht mehr die gewünschten Eigenschaften auf. Wenn die Fertigung wieder angefahren wird, ist nicht wieder sofort die erwünschte Produkt-Qualität erreichbar, so daß über eine gewisse Zeitspanne Ausschuß produziert wird.

Das Anhaften von Material an dem Schneidwerkzeug führt daher nicht nur zu einem Produktionsausfall, während das Schneidwerkzeug ausgewechselt wird, sondern darüberhinaus auch zu einem erheblichen Produktionsverlust beim erneuten Anfahren der Extrusionsmaschine.

Ein gattungsgemäßes Schneidwerkzeug, siehe DE-A-4028558, geht im Zusammenhang mit einer Vorrichtung zum Zerteilen einer Vielzahl kleiner keramischer Massestränge hervor. Dieses bekannte Schneidwerkzeug ist als ein Schneidstern ausgebildet, welcher aus einer mit Schneidmessern bestückten Nabe besteht.

Der Erfindung liegt die **Aufgabe** zugrunde, ein Schneidwerkzeug für eine Extrusionsmaschine der eingangs genannten Art zu schaffen, durch welches auch für klebrige Materialen bei sauberem Schnitt ein Anbacken von Material am Schneidwerkzeug weitgehend vermieden wird und bei dem die Messerklingen einfach und zugleich zuverlässig gehaltert sind.

Ausgehend von einem gattungsgemäßen Schneidwerkzeug wird die Aufgabe durch die kennzeichnenden Merkmale des Anspruchs 1 gelöst.

Es ist vorgesehen, daß ist Messerhalterung in der Nabe des Flügelrades angeordnet ist, daß die Messerhalterung als Einspanneinrichtung für die Messerklingen ausgebildet ist, daß die Messerklingen im wesentlichen radial von der Nabe abstehen, daß die Messerklingen einen Anstellwinkel aufweisen und daß die Messerklingen ausschließlich in der Nabe fliegend gelagert und gehalten sind.

Die Erfindung bedient sich der Erkenntnis, daß ausschließlich in einer Nabe gelagerte und durch geringe Dicke hinreichend flexible Messerklingen, die unter einem bestimmten Anstellwinkel angeordnet sind, einerseits praktisch sauber bleiben und andererseits selbsttätig nachgeschliffen werden.

Es ist ein wesentlicher Vorteil, daß ein Stillstand der Produktion und die mit dem erneuten Anfahren der Produktion verbundenen Nachteile vermieden werden. Es haftet nämlich an den gemäß der Erfindung ausgebildeten und angeordneten Messerklingen praktisch kein Material mehr an, so daß der Schneidvorgang nicht mehr behindert wird, keine Unwucht entstehen kann und kein Stillstand der Produktion verursacht wird.

Die Messerklingen bieten dem Granulat-Material offenbar eine so geringe Widerstandsfläche, und es wird die Strömung von Luft und Material derart gestaltet, daß das mit dem Schneidwerkzeug gemäß der Erfindung hergestellte Granulat-Material ohne weiteres durch das Ausfallrohr abgeführt werden kann.

Außerdem sind die Messerklingen hinreichend elastisch, um während des Arbeitsvorganges durch die dann wirkenden Kräfte elastisch an das Formwerkzeug angedrückt zu werden, so daß die Messer-Vorderkanten stets selbsttätig nachgeschliffen werden. Bei geeigneter Dimensionierung kann erreicht werden, daß die Standzeiten der Messerklingen überraschend lang sind, weil die Messerklingen gerade hinreichend fest an das Formwerkzeug angedrückt werden, daß gerade die für einen ordnungsgemäßen Schnitt erforderliche Schärfe der Messerklingen aufrechterhalten wird.

Der Erfindungsgegenstand sieht vor, daß zur Ausbildung der Messerhalterung in der Nabe unter einem dem Anstellwinkel der Messerklingen entsprechenden Winkel gegenüber der Rotationsebene des Flügelrades schräg angeordneten Auflageflächen für die Messerklingen ausgebildet sind. Auf diese Weise ergeben sich einfach herstellbare und für eine präzise Position der Messerklingen geeignete Lagerungen. Bei dieser Anordnung ist vorgesehen, daß Klemmkeile vorgesehen sind, welche im Bereich der Auflageflächen mit der Nabe verschraubbar sind, und daß jede Messerklinge zwischen einer Auflagefläche und einem Klemmkeil eingespannt ist. Gemäß dem Erfindungsgegenstand wird erreicht, daß die Messerklingen in einfach und preiswert herstellbaren Lagerungen rasch und gleichwohl exakt und stabil gehalten werden.

Eine für die Strömungsverhältnisse und die Abweisung von Materialansatz besonders günstige Ausführungsform des Erfindungsgegenstandes ergibt sich dadurch, daß die Nabe die Form eines flachen Kegelstumpfes aufweist. Wenn bei dieser Gestaltung der Nabe darauf geachtet wird, daß die Oberfläche möglichst glatt ausgebildet ist, d.h. möglichst keine vorstehenden Teile aufweist, läßt sich erreichen, daß an dem gesamten Schneidwerkzeug so gut wie kein Materialansatz auftritt. Es erübrigt sich dann eine Unterbrechung des Produktionsvorganges, weil keine Reinigung des Schneidwerkzeuges erforderlich ist.

Weiterhin kann vorzugsweise vorgesehen sein, daß die Messerklingen als dünne ebene Platten ausgebildet sind. Derartige Messerklingen können hinreichend elastisch ausgebildet sein, so daß sie sich während des Betriebes aufgrund der auf die Messerklingen wirkenden Kräfte an das Formwerkzeug gerade fest genug anlegen, daß die Messerschneiden permanent nachgeschliffen werden, dabei jedoch kein unnötiger Reibungswiderstand entsteht.

Gemäß einer weiteren besonderen Ausführungsform des Erfindungsgegenstandes ist vorgesehen, daß die Messerklingen in ihrer Grundrißform radial nach außen verjüngt ausgebildet sind. Bei dieser Ausführungsform weisen die Messerklingen zwar eine hinreichende Stabilität und/oder Festigkeit auf, es wird jedoch zugleich ihre Elastizität so vergrößert, daß eine erwünschte Anlage an dem Formwerkzeug im Hinblick auf das Nachschleifen gefördert wird.

Eine für die Fertigung besonders günstige Form der Messerklingen ergibt sich dadurch, daß die Messerklingen im Grundriß im wesentlichen trapezförmig ausgebildet sind.

Eine weitere besonders vorteilhafte Ausgestaltung des Erfindungsgegenstandes sieht vor, daß die Messerklingen derart elastisch ausgebildet sind, daß sie im Betriebszustand des Schneidwerkzeugs unter der Arbeitsbelastung entgegen der Material-Förderung durchbiegbar sind. Die Messerklingen können durch geeignete Material-Auswahl, durch günstige Formgebung, durch sehr geringe Dicke und durch weitere Maßnahmen besonders elastisch ausgebildet werden. Dadurch wird erreicht, daß die Messerklingen im Bereich ihrer Schneide während des Betriebes nicht zu stark am Formwerkzeug schleifen, jedoch hinreichend fest angedrückt werden, um das erwünschte Nachschleifen gerade zu gewährleisten.

Für eine besonders wirksame Funktion der Messerklingen hat sich gezeigt, daß zur Lösung der Erfindungsaufgabe besonders günstige Verhältnisse dadurch vorliegen, daß der Anstellwinkel der Messerklingen zwischen 0 und 45 Grad beträgt. Die Wahl eines geeigneten Anstellwinkels hängt weitgehend von der Dimensionierung der Extrusionsmaschine insgesamt und natürlich auch von den Eigenschaften desjenigen Materials ab, welches verarbeitet werden soll.

Gemäß einer weiteren besonders bevorzugten Ausführungsform des Erfindungsgegenstandes ist vorgesehen, daß die Messer-klingen über ihre Fläche verteilt angeordnete Löcher aufweisen. Durch die Löcher in den Messerklingen wird die Strömung in der Weise beeinflußt, daß keine zu starke Verwirbelung auftritt. Die Löcher in den Messerklingen verhindern ein übermäßig starke Wirbelbildung, insbesondere dadurch, daß zwischen der Oberseite und der Unterseite an einer Messerklinge ein Druckausgleich herbeigeführt werden kann. Diese Ausführungsform des Erfindungsgegenstandes bietet den überraschenden Vorteil, daß durch geringere Wirbelbildung das Granulat besonders geschont wird. Die Erfindung bedient sich nämlich auch der Erkenntnis, daß durch eine stark verwirbelte Strömung die Granulat-Teilchen einer starken Reibung aneinander ausgesetzt werden. Dadurch werden die Kanten an den Granulat-Teilchen abgeschliffen. Dabei entsteht neben den erwünschten Granulat-Teilchen ein unerwünschter Pulver-Staub. Die Bildung eines derartigen Pulver-Staubes kann in überraschender Weise durch Löcher in den Messerklingen außerordentlich stark reduziert werden.

Insgesamt wird durch die erfindungsgemäße Ausbildung des Schneidwerkzeuges ein erheblicher technisch-wirtschaftlicher Vorteil dadurch erreicht, daß die Produktion nicht mehr zur Beseitigung von Verschmutzung am Schneidwerkzeug und/oder zum Nachschleifen der Messerklingen unterbrochen werden muß.

Die Erfindung wird nachfolgend beispielsweise anhand der Zeichnung beschrieben; in dieser zeigen:
- Fig. 1: einen schematischen Vertikalschnitt durch eine Extrusionsmaschine, welche mit einem erfindungsgemäßen Schneidwerkzeug ausgestattet ist, und
- Fig. 2: eine Draufsicht auf ein erfindungsgemäßes Schneidwerkzeug.

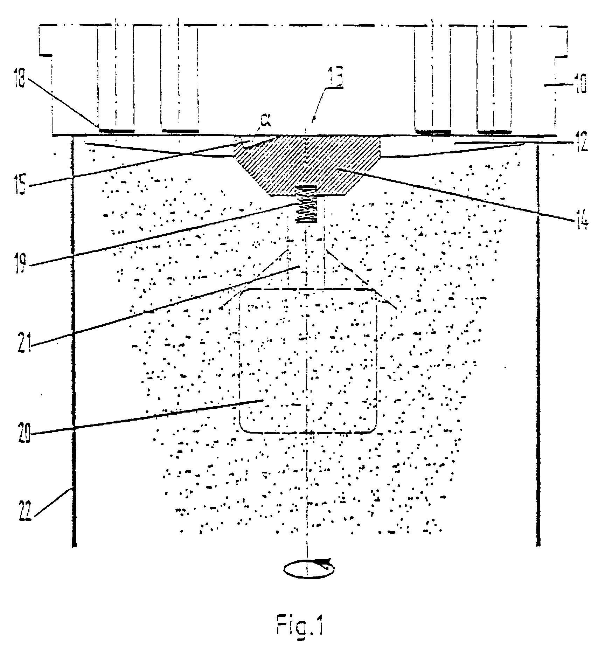

Die Fig. 1 zeigt einen Teil einer Extrusionsmaschine, und zwar ein Formwerkzeug 10, welches rein schematisch angedeutete Kanäle 18 aufweist, durch welche Material ausgepreßt werden kann. Die Kanäle 18 können beispielsweise einen runden Querschnitt haben, dessen Durchmesser in der Größenordnung von etwa einem Millimeter liegt. Es können natürlich auch andere Querschnittsformen verwendet werden. Die Querschnittsform der Kanäle 18 hängt davon ab, welche Produkte verarbeitet werden und welche Formen die Endprodukte aufweisen sollen.

Unterhalb des Formwerkzeuges 10 ist ein Schneidwerkzeug 11 angeordnet. Das Schneidwerkzeug 11 weist im zentralen Bereich eine Nabe 14 auf, in welcher radial nach außen stehende Messerklingen 12 gehalten sind.

Das Schneidwerkzeug 11 wird über eine Antriebswelle 21 mit Hilfe eines Motors 20 in Drehung versetzt. Die Drehzahl kann bis zu etwa eintausend Umdrehungen pro Minute betragen. Natürlich können auch geringere Drehzahlen verwendet werden. Die jeweils geeignete Drehzahl ergibt aus der Konstruktion der Extrusionsmaschine einerseits und den Eigenschaften des jeweils verarbeiteten Materials anderseits.

In einer alternativen Ausführungsform könnte an der Stelle des Motors 20 auch ein Winkelgetriebe angeordnet sein, welches über eine - in der Darstellung der Fig. 1 - horizontale Antriebswelle mit einem außerhalb eines in der Fig. 1 mit 22 bezeichneten Ausfallrohres angeordneten Motor verbunden sein könnte.

In der Darstellung der Fig. 1 ist das Schneidwerkzeug 11 um eine Mittelachse drehbar, die durch eine strich-punktierte Linie veranschaulicht ist.

Die Messerklingen 12 des Schneidwerkzeugs 11 werden gemäß der Darstellung in Fig. 1 durch eine Druckfeder 19 nach oben an das Formwerkzeug leicht angedrückt. Dadurch soll erreicht werden, daß die Schneiden der Messerklingen 12 an der unteren Fläche des Formwerkzeuges 10 auf einer Kreisbahn entlanggeführt werden, wobei die Schneiden derart an die Fläche des Formwerkzeuges angedrückt werden, daß die Messerklingen ständig beim Betrieb der Maschine nachgeschliffen werden.

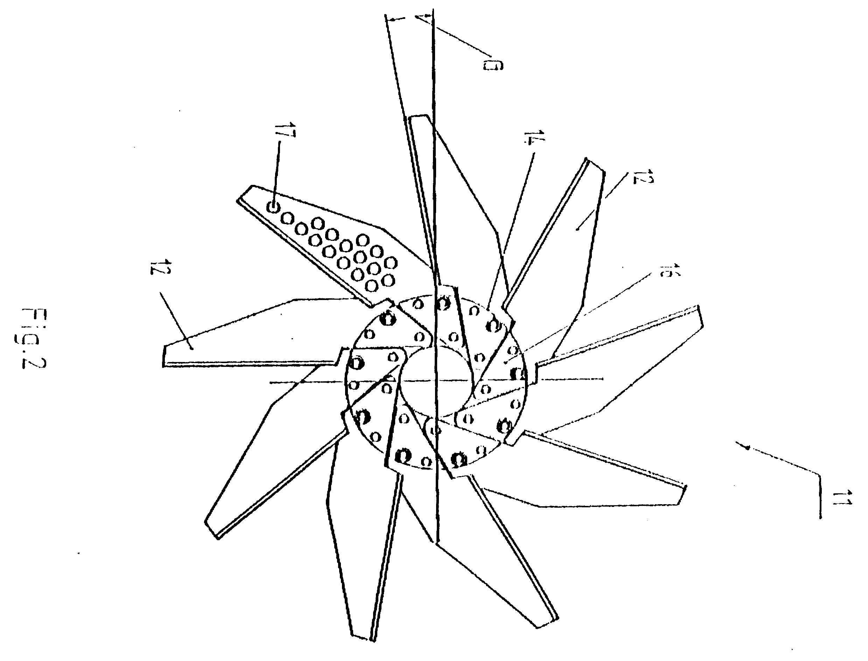

Die Fig. 2 zeigt einen Grundriß des erfindungsgemäßen Schneidwerkzeuges, welches in seiner Gesamtheit mit dem Bezugszeichen 11 bezeichnet ist. Im zentralen Bereich des Schneidwerkzeuges 11 ist die Nabe 14 erkennbar, an welcher die Messerklingen 12 angebracht sind. Zur Anbringung der Messerklingen 12 am Schneidwerkzeug 11 ist eine insgesamt mit 13 bezeichnete Messerhalterung vorgesehen, die folgendermaßen aufgebaut ist: Es sind zur Lagerung der Messerklingen 12 an der Nabe 14 des Schneidwerkzeugs 11 aus der Fig. 1 ersichtliche Auflageflächen 15 ausgebildet. Die Auflageflächen 15 weisen gegenüber der - gemäß der Darstellung in Fig. 1 horizontalen - Rotationsebene des Schneidwerkzeugs 11 einen Anstellwinkel α auf. Genauer gesagt, es sind die Auflageflächen 15 gegenüber der Rotationsebene des Schneidwerkzeugs 11 unter einem bestimmten Winkel geneigt. Wenn die Messerklingen 12 auf diese Auflageflächen 15 aufgelegt werden, wird dabei erreicht, daß die Messerklingen 12 gegenüber der Rotationsebene des Schneidwerkzeugs 11 einen Anstellwinkel α haben. Die Befestigung der Messerklingen 12 auf den Auflageflächen 15 an der Nabe 14 wird dadurch erreicht, daß auf die Messerklingen 12 Klemmkeile 16 aufgelegt werden, die mit der Nabe 14 verschraubt werden. Auf diese Weise werden die Messerklingen 12 zwischen den Auflagefläche 15 und den Klemmkeilen 16 festgeklemmt. Die Klemmkeile 16 sind in der Fig. 2 in der Draufsicht dargestellt.

Durch die beschriebene Messerhalterung 13 sind die Messerklingen 12 nur im zentralen Bereich des als Flügelrad ausgebildeten Schneidwerkzeuges 11 gehalten und stehen frei radial nach außen.

Die Messerklingen 12 werden mit ihren Schneidkanten nicht nur durch die Druckfeder 19 an die Unterseite des Formwerkzeuges 10 angedrückt, eine zusätzliche Andruckkraft entsteht auch beim Betrieb der Extrusionsmaschine durch die Strömungskräfte und die Materialkräfte, welche auf die Messerklingen 12 dadurch wirken, daß die Messerklingen unter einem Anstellwinkel α auf ihrer Kreisbahn geführt werden. Es wirken somit zwei verschiedene Kraftkomponenten auf die Messerklingen 12, und zwar beide mit der Tendenz, die Messerklingen 12 an das Formwerkzeug 10 anzudrücken. Die eine Kraftkomponente ergibt sich durch die Druckfeder 19, und die andere Kraftkomponente entsteht durch die oben bereits angesprochenen Strömungs- und Material-Kräfte, die auf die unter dem Anstellwinkel α rotierenden Messerklingen 12 im Betrieb wirksam werden.

Aus der Darstellung der Fig. 2 ist auch ersichtlich, daß die Messerklingen 12 mit Löchern 17 versehen sein können. Durch diese Löcher 17 wird ein Druckausgleich zwischen der Oberseite und der Unterseite der Messerklingen 12 herbeigeführt. Im Ergebnis entstehen durch einen derartigen Druckausgleich weniger Wirbel, und es kann dadurch erreicht werden, daß insgesamt eine gleichmäßigere Strömung erreicht wird, die relativ geringe Turbulenzen aufweist. Durch die weitgehende Vermeidung von Turbulenzen wird gemäß der Erfindung eine Beschädigung der einzelnen Granulat-Teilchen erreicht, welche mit Hilfe des Schneidwerkzeuges 11 aus den Profilsträngen herstellt werden, welche aus den Kanälen 18 des Formwerkzeuges 10 ausgepreßt werden. Bei der Herstellung von Waschpulver können beispielsweise die Profilstränge auf etwa ein Millimeter Länge abgeschnitten werden, so daß kleine Granulat-Teilchen entstehen, welche die Form eines Zylinders aufweisen, der einen Durchmesser und eine Länge von jeweils etwa ein Millimeter hat. Da es erwünscht ist, die Kanten der Granulat-Teilchen zu erhalten, erweist es sich als besonders günstig, gemäß der Erfindung Turbulenzen in der Strömung und damit Reibungseffekte zwischen Granulat-Teilchen weitgehend zu vermindern.

Versuche mit der erfindungsgemäßen Vorrichtung haben gezeigt, daß das Schneidwerkzeug 11 über lange Betriebszeiten praktisch sauber bleibt, d.h. ohne nennenswerten Ansatz des verarbeiteten Produktes. Außerdem konnte bei den Versuchen festgestellt werden, daß die Schneidkanten der Messerklingen 12 im Betrieb der Extrusionsmaschine fortwährend nachgeschliffen werden. Auf diese Weise werden gemäß der Erfindung einerseits praktisch unversehrte Granulat-Teilchen erzeugt und zugleich Produktionsunterbrechungen weitgehend vermieden, die bisher zum Reinigen des Schneidwerkzeuges und/oder zum Nachschleifen der Messerklingen erforderlich waren.

## Patentansprüche

1. Schneidwerkzeug für eine Extrusionsmaschine, insbesondere zur Extrusion von chemischen Granulaten, vorzugsweise für Waschmittel, mit einem im Bereich einer Material-Austrittsöffnung angeordneten Formwerkzeug (10), dem das drehbar gelagerte Schneidwerkzeug (11) zugeordnet ist, welches nach Art eines Flügelrades ausgebildet ist, bei dem mehrere Messerklingen (12) an einer in einer Nabe (14) des Flügelrades angeordneten Messerhalterung (13) angebracht und an einer ebenen Auflagefläche (15) des Formwerkzeugs (10) auf einer Kreisbahn entlangführbar sind, wobei die Messerklingen (12) im wesentlichen radial von der Nabe (14) abstehen, einen Anstellwinkel (α) aufweisen und ausschließlich in der Nabe (14) fliegend gelagert und gehalten sind,
dadurch **gekennzeichnet**,
daß die Messerhalterung (13) als Einspanneinrichtung zum Einspannen der Messerklingen (12) ausgebildet ist, daß zur Ausbildung der Messerhalterung (13) in der Nabe (14) unter einem den Anstellwinkel (α) der Messerklingen (12) entsprechenden Winkel gegenüber der Rotationsebene des Flügelrades schräg angeordnete Auflageflächen (15) für die Messerklingen (12) ausgebildet sind,
daß Klemmkeile (16) vorgesehen sind, welche im Bereich der Auflageflächen (15) mit der Nabe (14) verschraubbar sind, und
daß jede Messerklinge (12) zwischen einer Auflagefläche (15) und einem Klemmkeil (16) eingespannt ist.

2. Schneidwerkzeug nach Anspruch 1,
dadurch **gekennzeichnet**,
daß die Nabe (14) die Form eines flachen Kegelstumpfes aufweist.

3. Schneidwerkzeug nach einem der vorhergehenden Ansprüche,
dadurch **gekennzeichnet**,
daß die Messerklingen (12) als dünne ebene Platten ausgebildet sind.

4. Schneidwerkzeug nach einem der vorhergehenden Ansprüche,
dadurch **gekennzeichnet**,
daß die Messerklingen (12) in ihrer Grundrißform radial nach außen verjüngt ausgebildet sind.

5. Schneidwerkzeug nach Anspruch 4,
dadurch **gekennzeichnet**,
daß die Messerklingen (12) im Grundriß im wesentlichen trapezförmig ausgebildet sind.

6. Schneidwerkzeug nach einem der vorhergehenden Ansprüche,
dadurch **gekennzeichnet**,
daß die Messerklingen (12) derart elastisch ausgebildet sind, daß sie im Betriebszustand des Schneidwerkzeugs unter der Arbeitsbelastung entgegen der Material-Förderrichtung durchbiegbar sind.

7. Schneidwerkzeug nach einem der vorhergehenden Ansprüche,
dadurch **gekennzeichnet**,
daß der Anstellwinkel (α) der Messerklingen (12) zwischen 0 und 45 Grad beträgt.

8. Schneidwerkzeug nach einem der vorhergehenden Ansprüche,
dadurch **gekennzeichnet**,
daß die Messerklingen (12) über ihre Fläche verteilt angeordnete Löcher (17) aufweisen.

## Claims

1. Cutting tool for an extrusion machine, particularly for the extrusion of chemical granules, preferably for detergents, with a mould (10) positioned in the area of a material discharge orifice and with which is associated the pivotably mounted cutting tool (11), which is constructed in the manner of an impeller, in which several knife blades (12) are fitted to a blade holder (13) located in a hub (14) of the impeller and can be moved on a circular path on a planar bearing surface (15) of the mould (10), the blades (12) projecting substantially radially from the hub (14), have a setting angle (α) and are exclusively mounted and held in cantilevered manner in the hub (14), characterized in that the blade holder (13) is constructed as a clamping device for clamping the blades (12), that for the construction of the blade holder (13) in the hub (14) at an angle corresponding to the setting angle (α) of the blades (12), bearing surfaces (15) for the blades (12) are constructed in inclined manner with respect to the rotation plane of the impeller, that clamping wedges (16) are provided and can be screwed to the hub (14) in the area of the bearing surfaces (15) and that each knife blade (12) is clamped between a bearing surface (15) and a clamping wedge (16).

2. Cutting tool according to claim 1, characterized in that the hub (14) is shaped like a flat truncated cone.

3. Cutting tool according to one of the preceding claims, characterized in that the knife blades (12) are constructed as thin, planar plates.

4. Cutting tool according to one of the preceding claims, characterized in that, in ground plan, the knife blades (12) taper radially outwards.

5. Cutting tool according to claim 4, characterized in that, in ground plan, the knife blades (12) are substantially trapezoidal.

6. Cutting tool according to one of the preceding claims, characterized in that the knife blades (12) are constructed elastically in such a way that in the operating state of the cutting tool they can be bent counter to the material feed direction under the working load.

7. Cutting tool according to one of the preceding claims, characterized in that the setting angle (α) of the knife blades (12) is between 0 and 45°.

8. Cutting tool according to one of the preceding claims, characterized in that the knife blades (12) have holes (17) distributed over their surface.

## Revendications

1. Outil de coupe pour une extrudeuse, notamment pour l'extrusion de granulés chimiques, de préférence des détergents, avec un outil de formage (10) placé au niveau d'une ouverture de sortie de la matière, outil auquel est associé l'outil de coupe (11) monté rotatif, lequel est conformé à la manière d'une roue à ailettes dans laquelle plusieurs lames (12) de couteau sont rapportées sur un support (13) de lames placé sur un moyeu (14) de la roue à ailettes et peuvent être guidées le long d'une surface d'appui plane (15) de l'outil de formage (10) sur une trajectoire circulaire, les lames (12) de couteau dépassant du moyeu (14) pour l'essentiel de manière radiale, présentant un angle d'attaque (α) et étant montées et tenues mobiles exclusivement dans le moyeu (14), ***caractérisé en ce que*** le support (13) de lames est conformé en dispositif de serrage destiné à serrer les lames (12), ***en ce que***, pour former le support (13) de lames dans le moyeu (14), des surfaces d'appui (15) inclinées d'un angle correspondant à l'angle d'attaque (α) des lames (12) de couteau par rapport au plan de rotation de la roue à ailettes sont formées pour les lames (12) de couteau, ***en ce que*** des cales de blocage (16) sont prévues, qui peuvent se visser au moyeu (14) au niveau des surfaces d'appui (15), et ***en ce que*** chaque lame (12) de couteau est serrée entre une surface d'appui (15) et une cale de blocage (16).

2. Outil de coupe selon la Revendication 1, ***caractérisé en ce que*** le moyeu (14) présente la forme d'un cône tronqué plat.

3. Outil de coupe selon l'une quelconque des Revendications précédentes, ***caractérisé en ce que*** les lames (12) de couteau sont conformées en plaques planes minces.

4. Outil de coupe selon l'une quelconque des Revendications précédentes, ***caractérisé en ce que*** les lames (12) de couteau ont une forme en plan effilée vers l'extérieur dans le sens radial.

5. Outil de coupe selon la Revendication 4, ***caractérisé en ce que*** les lames (12) de couteau ont une forme en plan sensiblement trapézoïdale.

6. Outil de coupe selon l'une quelconque des Revendications précédentes, ***caractérisé en ce que*** les lames (12) de couteau sont d'une conformation élastique telle qu'à l'état de service de l'outil de coupe, elles peuvent se fléchir sous l'effet de la charge de travail dans le sens opposé à la direction de progression de matière.

7. Outil de coupe selon l'une des Revendications précédentes, ***caractérisé en ce que*** l'angle d'attaque (α) des lames (12) de couteau vaut entre 0 et 45 degrés.

8. Outil de coupe selon l'une des Revendications précédentes, ***caractérisé en ce que*** les lames (12) de couteau présentent des trous (17) répartis sur leurs surface.
